# EUROPÄISCHE PATENTANMELDUNG

(11) **EP 4 647 145 A1**
(43) Veröffentlichungstag der Anmeldung: **12.11.2025**
(21) Anmeldenummer: 25173595.7
(22) Anmeldetag: 30.04.2025
(51) Int. Cl.: B01D 53/04, B01D 53/047, B01D 53/26

(54) **VERFAHREN ZUR STEUERUNG EINER ANLAGE ZUR ABTRENNUNG VON KOHLENSTOFFDIOXID AUS DER UMGEBUNGSLUFT SOWIE ANLAGE**

(30) Priorität: 03.05.2024 DE 102024112495
(71) Anmelder: VOLKSWAGEN AG, 38440 Wolfsburg (DE); Everllence SE, 86153 Augsburg (DE)
(72) Erfinder: Heimermann, Christian, 38442 Wolfsburg (DE); Wiegel, Marcel, 39649 Gardelegen / OT Sachau (DE); Kawelke, Peter, 38442 Wolfsburg (DE); Hofer, Martin, 38118 Braunschweig (DE); Buschmann, Holger, 46535 Dinslaken (DE); Behnke, Klaus, 69198 Schriesheim (DE); Weber, Stephan, 45699 Herten (DE)
(74) Vertreter: Gulde & Partner

(57) **Zusammenfassung**

Die Erfindung betrifft ein Verfahren zur Steuerung einer Anlage (10) zur Abtrennung von Kohlenstoffdioxid (48) aus der Umgebungsluft (74). Das Verfahren unterscheidet zwischen einem Normalbetrieb, in welchem Kohlenstoffdioxid (48) aus der Umgebungsluft (78) abgetrennt wird und einem Sonderbetrieb, welcher nicht primär zur Abtrennung von Kohlenstoffdioxid (48) dient. Der Normalbetrieb umfasst ein Fördern (110) eines Luftstroms (68) der Umgebungsluft (74) in einen ersten Prozessraum (26) der Anlage, wobei der Luftstrom (68) in dem ersten Prozessraum (26) getrocknet wird. Der getrocknete Luftstrom (68) der Umgebungsluft wird aus dem ersten Prozessraum (26) in einen zweiten Prozessraum (27) weitergeleitet, in welchem eine Adsorption und eine anschließende Desorption von Kohlenstoffdioxid (48) erfolgt. Das desorbierte Kohlenstoffdioxid wird in einer Speichereinheit (16) eingelagert.

Es ist vorgesehen, dass die Anlage (10) in einem von dem Normalbetrieb abweichenden Sonderbetrieb betrieben wird, welche vor oder nach dem Normalbetrieb erfolgt, wobei die Anlage (10) in dem Sonderbetrieb mit von dem Normalbetrieb abweichenden Betriebsparametern betrieben wird.

Die Erfindung betrifft ferner eine Anlage (10) zur Durchführung eines solchen Verfahrens.

## Beschreibung

Die Erfindung betrifft ein Verfahren zur Steuerung einer Anlage zur Abtrennung von Kohlenstoffdioxid aus der Umgebungsluft sowie eine Anlage zur Durchführung eines solchen Verfahrens gemäß dem Oberbegriff der unabhängigen Patentansprüche.

Aus dem Stand der Technik sind Anlagen und Verfahren zum Abscheiden von Kohlenstoffdioxid aus der Umgebungsluft bekannt. Eine solche Abscheidung kann nach dem sogenannten "Direct-Air-Capture-Verfahren" durchgeführt werden, wobei das Kohlenstoffdioxid unmittelbar aus der Umgebungsluft abgeschieden, eingespeichert oder einem weiteren Prozess zugeführt werden kann. Die Abtrennung von Kohlenstoffdioxid aus der Umgebungsluft kann durch unterschiedliche Sorbenten erfolgen. Typischerweise werden zur Abtrennung von Kohlenstoffdioxid Chemisorbenten und/oder Physisorbenten eingesetzt. Amin-basierte Chemisorbenten haben das Problem der Alterung und Degradation, wenn das Material bei Temperaturen größer ca. 60 °C mit Sauerstoff in Verbindung kommt. Dies kann während der Desorptionsphase bei Temperaturen um 100 °C passieren, wenn nicht Gegenmaßnahmen ergriffen werden, wie beispielsweise eine inerte Atmosphäre im System durch den Einsatz von Wasserdampf oder anderen Gasen. Diese Schutzmaßnahmen sind aufwendig und teuer. Physisorbenten, wie beispielsweise Zeolithen, haben das Problem, dass die Affinität des Sorbentmaterials für Wasser(dampf) höher ist als für Kohlenstoffdioxid, wodurch die Umgebungsluft vor der Zufuhr zu einem Adsorptionsraum, in welchem das Zeolithmaterial angeordnet ist, zunächst getrocknet werden muss. Eine solche Trocknung der Luft ist ebenfalls aufwendig und teuer.

Neben einem Normalbetrieb der Anlage, in dem ein zyklischer Trocknungsprozess und ein dem Trocknungsprozess nachgeschalteter zyklischer Sorptionsprozess zur Adsorption und anschließende Desorption von Kohlenstoffdioxid erfolgt, gibt es bei Anlagen zur Abtrennung von Kohlenstoffdioxid aus der Umgebungsluft weitere Betriebsmodi, welche von diesem Normalbetrieb abweichen, für welche spezielle Betriebsstrategien notwendig sein können.

Aus der US 2023 / 0 203 968 A1 sind ein Verfahren und eine Anlage bekannt, bei welcher die Abtrennung von Kohlendioxid aus anderen Gasen, einschließlich Umgebungsluft und Verbrennungsabgasen durch Prozesse erreicht wird, bei denen große Mengen an Wärme zur Regeneration einer Chemikalie, die Kohlendioxid absorbiert oder mit ihm reagiert, genutzt werden. Zu diesen Verfahren gehören unter anderem Verfahren, die einen Karbonisierungs- oder Kalzinierungsreaktionszyklus unter Verwendung von Kalzium- oder Kaliumreaktionen, oder Absorptions-/Adsorptions-/Freisetzungszyklen unter Verwendung von flüssigen oder festen Materialien wie Zeolithen oder Aminen, verwenden. So kann beispielsweise ein Verbrennungsabgas aus einer industriellen Quelle oder aus einer Anlage zur direkten Abscheidung von Luft (DAC) Wärme zum Antrieb eines Lösungsmittel-"Reboilers", eines Dampferzeugers oder eines Kalziumkarbonat-Calcinators benötigen, um die Temperatur eines Reaktanten zu erhöhen, der die Abtrennung von Kohlendioxid bewirkt.

Die EP 1 132 125 A1 beschreibt ein System zur Steuerung der Absorptionsmittelkonzentration in einer Decarboxylierungsanlage, das einen Temperaturregler für das zirkulierende Wasser zum Waschabschnitt des Absorptionsturms oder einen Temperaturregler für das zirkulierende Wasser zum Kühlturm umfasst. Dabei wird der Kühlturm durch eine Flüssigkeitspegelsteuerungseinrichtung am Turmboden gesteuert, um die Temperatur des zirkulierenden Wassers zu steuern, wodurch die Konzentration des Absorptionsmittels geregelt wird.

Aus der EP 0 066 940 A1 sind ein Verfahren und eine Anlage bekannt, bei der Kohlenstoffdioxid bei der Gewinnung von Erdgas aus einem Gasstrom abgetrennt wird. Bei der Herstellung von Brenngas, das als Erdgassubstitut verwendet werden kann, wird das Erdöl einer katalytischen Dampfreformierung unterzogen, um ein Zwischengas zu erzeugen, das Methan, Kohlenmonoxid, Kohlendioxid und Dampf enthält. Das Zwischengas wird weiter umgesetzt, um aus den Kohlenstoffdioxiden und dem Wasserdampf mehr Methan zu erzeugen, wobei das entstehende Prozessgas beträchtliche überschüssige und unerwünschte Mengen an Wasserdampf und Kohlendioxid enthält, die entfernt werden müssen, bevor das Prozessgas die Anlage zur Verteilung verlassen kann.

Ferner ist aus der US 2023 / 0 167 756 A1 ein System zur mobilen Abscheidung von Kohlenstoffdioxid bekannt. Das System umfasst ein Abscheidungsmodul, ein Regenerationsmodul und ein Speichermodul. Das System kann optional ein thermisches Kontrollmodul und/oder einen Entfeuchter enthalten. Die US 2023 / 0 167 756 A1 offenbart zusätzlich ein Verfahren zur mobilen Kohlenstoffdioxidabscheidung mit einem solchen System.

Der Erfindung liegt nun die Aufgabe zugrunde, die Effizienz einer Anlage zur Abtrennung von Kohlenstoffdioxid in einem vom Normalbetrieb abweichenden Betriebszustand zu verbessern und insbesondere Wassereinlagerungen in ein Trocknungsmittel und/oder ein Sorbentmaterial zu minimieren.

Die Aufgabe wird durch ein Verfahren zur Steuerung einer Anlage zur Abtrennung von Kohlenstoffdioxid aus der Umgebungsluft gelöst. Das Verfahren unterscheidet zwischen einem Normalbetrieb, in welchem Kohlenstoffdioxid aus der Umgebungsluft abgetrennt wird und einem Sonderbetrieb, welcher nicht primär zur Abtrennung von Kohlenstoffdioxid dient.

Das Betreiben der Anlage zur Abtrennung von Kohlenstoffdioxid in einem Normalbetrieb, umfasst folgende Prozessschritte:
∘ Fördern eines Luftstroms der Umgebungsluft in einen ersten Prozessraum, wobei der Luftstrom in dem ersten Prozessraum getrocknet wird,
∘ Weiterleiten der getrockneten Umgebungsluft aus dem ersten Prozessraum in einen zweiten Prozessraum,
∘ Adsorbieren von Kohlenstoffdioxid aus dem getrockneten Luftstrom mit einem Sorbentmaterial in dem zweiten Prozessraum,
∘ Desorbieren des in dem Sorbentmaterial adsorbierten Kohlenstoffdioxids, und
∘ Einlagern des desorbierten Kohlenstoffdioxids in einer Speichereinheit.

Im Sonderbetrieb, der vor oder nach dem Normalbetrieb durchgeführt wird, wird die Anlage mit Betriebsparametern betrieben, die von den Betriebsparametern des Normalbetriebs abweichenden.

Unter einem Normalbetrieb der Anlage ist in diesem Zusammenhang ein Betrieb zu verstehen, bei welchem die Anlage mit mindestens 50 % ihrer Nennleistung Kohlenstoffdioxid aus der Atmosphäre abtrennt und einspeichert. Unter einem Sonderbetrieb sind in diesem Zusammenhang insbesondere, jedoch nicht abschließend ein Hochfahren der Anlage, ein Abschalten oder Herunterfahren der Anlage, ein Stillstandsmodus der Anlage, ein eingeschränkter oder gestoppter Betrieb nach einer erkannten Fehlfunktion zu verstehen. In diesem Sonderbetrieb wird die Anlage für den Normalbetrieb konditioniert, ohne dass in diesem Sonderbetrieb jedoch eine nennenswerte Abtrennung von Kohlenstoffdioxid aus der Atmosphäre erfolgt. Das erfindungsgemäße Verfahren ermöglicht es, in dem Sonderbetrieb eine effiziente Vorkonditionierung der Prozessräume der Anlage zu erreichen, um insbesondere eine Wassereinlagerung in dem Trocknungsmittel und/oder dem Sorptionsmittel zu minimieren. Ferner ermöglicht das Verfahren, dass die Effizienz in einem auf den Sonderbetrieb folgenden Normalbetrieb erhöht werden kann, da in den Prozessräumen bereits günstige Bedingungen zur Trocknung der Luft beziehungsweise zur Adsorption von Kohlenstoffdioxid vorherrschen.

Durch die in den abhängigen Ansprüchen aufgeführten Merkmale sind vorteilhafte Verbesserungen und Weiterentwicklungen des im unabhängigen Anspruch angegebenen Verfahren zur Steuerung einer Anlage zur Abtrennung von Kohlenstoffdioxid aus der Umgebungsluft möglich.

In bevorzugter Ausgestaltung des Verfahrens ist vorgesehen, dass der Sonderbetrieb ein Anfahren der Anlage nach einem Anlagenstillstand umfasst. Der Prozess des Anfahrens kann genutzt werden, um die Prozessräume der Anlage für den Normalbetrieb vorzukonditionieren. Insbesondere kann beim Anfahren der Anlage zunächst ein Einströmen von Umgebungsluft in einen der Prozessräume unterbunden werden, um eine solche Vorkonditionierung zu erleichtern.

Bevorzugt ist dabei, wenn beim Anfahren der Anlage eine zusätzliche Regeneration des Trocknungsmittels und/oder eine Trocknung des Sorbentmaterials erfolgt, bevor der Luftstrom der Umgebungsluft in eine Trocknungseinheit oder eine Sorptionseinheit der Anlage eingeleitet wird. Da das Trocknungsmaterial sowie das Sorbentmaterial bei einem längeren Stillstand und hoher relativer Luftfeuchtigkeit viel Wasserdampf aufnehmen, kann es notwendig sein, zunächst das Trocknungsmittel und/oder das Sorbentmaterial zu trocknen, bevor auf einen Normalbetrieb der Anlage umgeschaltet werden kann.

Besonders bevorzugt ist dabei, wenn zur Regeneration des Trocknungsmittels und/oder zur Trocknung des Sorbentmaterials eine Temperatur in einem der Prozessräume und/oder ein Druck in einem der Prozessräume gegenüber dem Normalbetrieb verändert wird. Durch ein Absenken des Drucks und/oder eine Anhebung der Temperatur kann der Trocknungsprozess verbessert werden, wodurch die Regeneration des Trocknungsmittels und/oder die Trocknung des Sorbentmaterials erleichtert werden kann. Zudem wird vorgeschlagen, die Trocknung durch Einbringung eines Spülgases zu unterstützen. Als Spülgas eignet sich möglichst trockene Luft, die an irgend einer Stelle im System bereits vorliegt, insbesondere aus einem parallel laufenden System, das bereits im Normalbetrieb läuft. Alternativ, oder zur Initialisierung, kann das Spülgas aus einem Speicher verwendet werden. Hier kommt sowohl getrocknete Luft aus einem Speicher als auch Stickstoff, insbesondere aus einem Druckspeicher, beispielsweise einer Druckflasche oder einem Flaschenbündel, in Frage.

In weiterer bevorzugter Ausgestaltung der Erfindung ist vorgesehen, dass der Sonderbetrieb ein Abstellen oder Herunterfahren der Anlage umfasst. Bei einem Abstellen der Anlage kann diese derart vorkonditioniert werden, dass in einem darauffolgenden Betrieb das Anfahren der Anlage und ein darauffolgender Normalbetrieb erleichtert werden. Dadurch kann die Prozesszeit beim Anfahren verkürzt werden.

Bevorzugt ist dabei, wenn der erste Prozessraum und/oder der zweite Prozessraum, vorzugsweise beide Prozessräume, beim Abstellen oder Herunterfahren der Anlage gasdicht verschlossen werden. Dadurch wird verhindert, dass feuchte Luft in die Prozessräume einströmt und sich Feuchtigkeit im Trocknungsmaterial und/oder im Sorbentmaterial sammelt. Dadurch kann auf einen zusätzlichen Trocknungsprozess beim darauffolgenden Anfahren der Anlage verzichtet werden oder ein solcher Trocknungsprozess zumindest verkürzt werden.

Alternativ oder zusätzlich ist mit Vorteil vorgesehen, dass der erste Prozessraum und/oder der zweite Prozessraum, vorzugsweise beide Prozessräume, beim Abstellen oder Herunterfahren der Anlage mit einem Überdruck beaufschlagt werden, um ein Einströmen von feuchter Umgebungsluft in einen der Prozessräume zu vermeiden. Durch das Erzeugen eines Überdrucks in einem der Prozessräume oder beiden Prozessräumen wird ein Einströmen von feuchter Umgebungsluft effizient verhindert, da bei einer Gasundichtigkeit zunächst die unter erhöhtem Druck stehende Luft aus dem jeweiligen Prozessraum ausströmt. Dadurch wird verhindert, dass feuchte Luft in die Prozessräume einströmt und sich Feuchtigkeit im Trocknungsmaterial und/oder im Sorbentmaterial sammelt. Dadurch kann auf einen zusätzlichen Trocknungsprozess beim darauffolgenden Anfahren der Anlage verzichtet werden oder ein solcher Trocknungsprozess zumindest verkürzt werden.

In einer weiteren vorteilhaften Ausgestaltung des Verfahrens ist vorgesehen, dass der Sonderbetrieb einen Stillstandsmodus der Anlage umfasst. Unter einem Stillstandmodus ist ein zeitlich begrenzter Betriebsmodus zu verstehen, bei welchem die Anlage nicht komplett abgeschaltet wird, jedoch keine Umgebungsluft getrocknet und/oder kein Kohlenstoffdioxid abgetrennt wird. Insbesondere kann ein solcher Stillstandsmodus umfassen, dass das mindestens eine Förderelement zur Förderung eines Luftstroms der Umgebungsluft durch die Anlage abgeschaltet ist.

Bevorzugt ist dabei, wenn der erste Prozessraum und/oder der zweite Prozessraum, vorzugsweise beide Prozessräume, beim Stillstandsmodus gasdicht verschlossen werden. Dadurch wird verhindert, dass feuchte Luft in die Prozessräume einströmt und sich Feuchtigkeit im Trocknungsmaterial und/oder im Sorbentmaterial sammelt. Dadurch kann auf einen zusätzlichen Trocknungsprozess beim darauffolgenden Anfahren der Anlage verzichtet werden oder ein solcher Trocknungsprozess zumindest verkürzt werden.

Alternativ oder zusätzlich ist mit Vorteil vorgesehen, dass ein Luftstrom während des Stillstandsmodus in zumindest einem der Prozessräume, vorzugsweise in beiden Prozessräumen zirkuliert, um ein Einströmen von Frischluft in den Prozessraum zu verhindern. Alternativ kann der Luftstrom im Stillstandsmodus auch durch beide Prozessräume zirkulieren, sodass ein Umluftstrom sowohl durch den ersten Prozessraums als auch anschließend durch den zweiten Prozessraum geführt wird. Durch eine Zirkulation der in den Prozessräumen befindlichen Umgebungsluft, welcher auch als Umluftbetrieb bezeichnet werden kann, erfolgt kein Gasaustausch aus dem jeweiligen Prozessraum. Dadurch kann ein Einströmen von feuchter Luft, deren Feuchtigkeit sich in dem Trocknungsmittel und/oder dem Sorbentmaterial einlagert, verhindert beziehungsweise reduziert werden.

Alternativ oder zusätzlich ist in einer vorteilhaften Ausgestaltung des Verfahrens vorgesehen, dass der erste Prozessraum und/oder der zweite Prozessraum beim Stillstandsmodus der Anlage mit einem Überdruck beaufschlagt werden, um ein Einströmen von feuchter Umgebungsluft in einen der Prozessräume zu vermeiden. Durch das Erzeugen eines Überdrucks in einem der Prozessräume oder beiden Prozessräumen wird ein Einströmen von feuchter Umgebungsluft effizient verhindert, da bei einer Gasundichtigkeit zunächst die unter erhöhtem Druck stehende Luft aus dem jeweiligen Prozessraum ausströmt. Dadurch wird verhindert, dass feuchte Luft in die Prozessräume einströmt und sich Feuchtigkeit im Trocknungsmaterial und/oder im Sorbentmaterial sammelt. Der Überdruck kann insbesondere durch einen zusätzlichen Gasspeicher hergestellt werden, in welchem trockene Luft oder Stickstoff bevorratet ist, um einen Eintritt von feuchter Umgebungsluft in einen der Prozessräume zu verhindern. Dadurch kann auf einen zusätzlichen Trocknungsprozess bei einem darauffolgenden Normalbetrieb der Anlage verzichtet werden oder ein solcher Trocknungsprozess zumindest verkürzt werden.

In einer weiteren vorteilhaften Ausgestaltung des Verfahrens ist vorgesehen, dass der Sonderbetrieb eine Anpassung der Anlagenparameter nach einer erkannten Fehlfunktion der Anlage umfasst. Eine Fehlfunktion der Anlage führt in der Regel dazu, dass ein Normalbetrieb der Anlage unterbrochen werden muss. Auch bei einer solchen Fehlfunktion ist es hilfreich, zumindest einen der Prozessräume gasdicht zu verschließen, Luft in einem der Prozessräume oder beiden Prozessräumen zirkulieren zu lassen und/oder einen entsprechenden Überdruck in dem Prozessraum aufzubauen, um das Eindringen von feuchter Umgebungsluft zu verhindern und das Trocknungsmittel sowie das Sorbentmaterial möglichst trocken zu halten, um nach Beseitigung der Fehlfunktion möglichst schnell wieder in einen Normalbetrieb wechseln zu können.

Ein weiterer Teilaspekt der Erfindung betrifft eine Anlage zur Abtrennung von Kohlenstoffdioxid aus der Umgebungsluft, welche eine Trocknungseinheit zur Trocknung der Umgebungsluft, mindestens ein Förderelement, insbesondere mindestens ein Gebläse zur Förderung eines Luftstroms der Umgebungsluft in einen ersten Prozessraum in der Trocknungseinheit aufweist. Dabei wird der Luftstrom beziehungsweise die Umgebungsluft in diesem ersten Prozessraum getrocknet. Die Anlage umfasst ferner eine Sorptionseinheit zur Adsorption von Kohlenstoffdioxid aus dem getrockneten Luftstrom mit einem Sorbentmaterial in einem zweiten Prozessraum sowie zur anschließenden Desorption des in dem Sorbentmaterial adsorbierten Kohlenstoffdioxids. Die Anlage weist ferner eine Speichereinheit auf, in welcher das abgetrennte Kohlenstoffdioxid nach der Desorption eingelagert wird. Ferner weist die Anlage eine Steuerungseinheit auf, wobei die Steuerungseinheit dazu eingerichtet ist, ein in den vorhergehenden Abschnitten beschriebenes Verfahren auszuführen.

Die erfindungsgemäße Anlage ermöglicht es, in dem Sonderbetrieb eine effiziente Vorkonditionierung der Prozessräume der Anlage zu erreichen, um insbesondere eine Wassereinlagerung in dem Trocknungsmittel und/oder dem Sorptionsmittel zu minimieren. Ferner ermöglicht die Anlage, dass die Effizienz in einem auf den Sonderbetrieb folgenden Normalbetrieb erhöht werden kann, da in den Prozessräumen bereits günstige Bedingungen zur Trocknung der Luft beziehungsweise zur Adsorption von Kohlenstoffdioxid vorherrschen.

In einer vorteilhaften Ausgestaltung der Anlage ist vorgesehen, dass in der Trocknungseinheit oder stromabwärts der Trocknungseinheit und stromaufwärts der Sorptionseinheit ein Luftfeuchtigkeitssensor und/oder ein Temperatursensor angeordnet ist. Durch die Ermittlung der Luftfeuchte und/oder der Temperatur in der Trocknungseinheit, insbesondere in dem ersten Prozessraum, kann die Regeneration des Trocknungsmaterials gesteuert werden. Ferner kann in einem Sonderbetrieb durch die Erfassung der Luftfeuchte und der Temperatur ermittelt werden, wann von einem Sonderbetrieb in einen Normalbetrieb der Anlage umgeschaltet werden kann.

In einer weiteren vorteilhaften Ausgestaltung der Anlage ist vorgesehen, dass in der Sorptionseinheit ein Temperatursensor, ein Drucksensor, ein Luftfeuchtigkeitssensor, ein Sensor zur Erfassung der Kohlenstoffdioxidkonzentration, ein Sensor zur Erfassung der Strömungsgeschwindigkeit und/oder ein Massenstromsensor und/oder ein Volumenstromsensor angeordnet ist. Durch die Erfassung einer Temperatur, eines Drucks, einer Luftfeuchtigkeit, einer Kohlenstoffdioxidkonzentration und/oder eine Strömungsgeschwindigkeit durch den zweiten Prozessraum kann die Adsorption beziehungsweise die Desorption optimiert werden. Ferner können durch die Erfassung des Drucks die Verschlusselemente gesteuert werden, um in einem Sonderbetrieb der Anlage ein unerwünschtes Einströmen von Umgebungsluft in die Sorptionseinheit zu verhindern. Ferner ermöglicht die Erfassung weitere Prozessgrößen wie beispielsweise der Luftfeuchtigkeit oder der Kohlendioxidkonzentration stromabwärts des Sorbenten eine Einleitung einer Trocknung der Sorbentmaterials, bevor neue Umgebungsluft in die Sorptionseinheit eingeleitet wird, um eine effiziente Abtrennung von Kohlenstoffdioxid zu ermöglichen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein bevorzugtes Ausführungsbeispiel einer Anlage zur Abtrennung von Kohlenstoffdioxid aus der Umgebungsluft;
- Figur 2: ein Ablaufdiagramm zur Steuerung einer solchen Anlage zur Abtrennung von Kohlenstoffdioxid aus der Umgebungsluft.

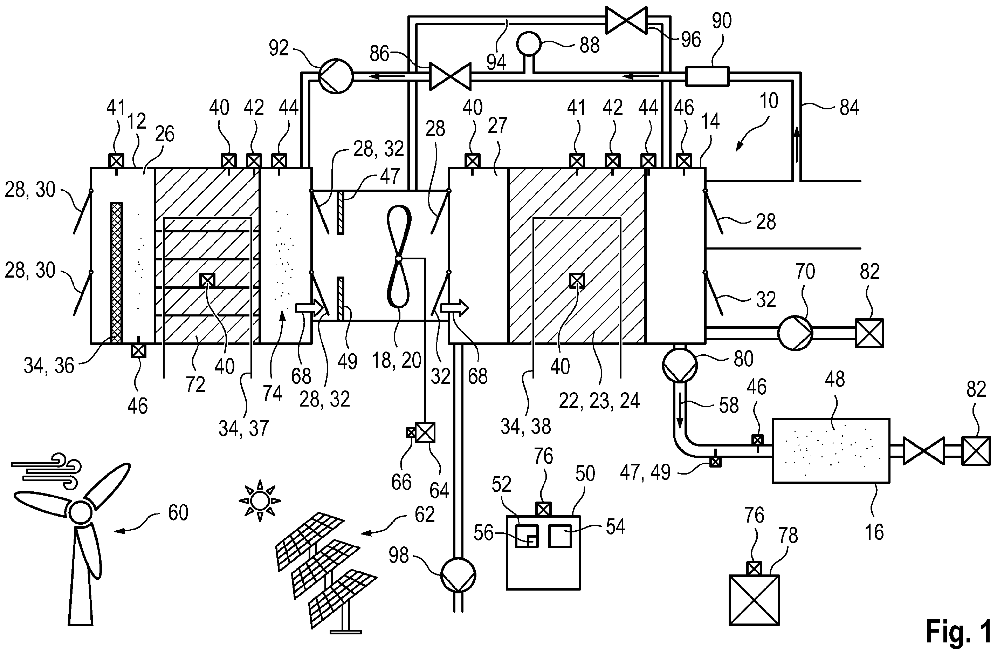

Figur 1 zeigt eine Anlage 10 zur Abtrennung von Kohlenstoffdioxid 48 aus der Umgebungsluft 74. Dabei wird der Anlage 10 Umgebungsluft, zugeführt und dieser Umgebungsluft 74 Kohlenstoffdioxid 48 und Wasser entzogen. Aus der Anlage 10 strömt ein Abluftstrom aus, welcher gegenüber der einströmenden Luft trockene, kohlenstoffdioxidreduzierte Luft aufweist. Die Anlage 10 umfasst eine Trocknungseinheit 12, in welcher dem Luftstrom 68 die in der Umgebungsluft enthaltene Luftfeuchte zumindest teilweise entzogen wird. Als Trocknungsmittel 72 für die Trocknungseinheit 12 kann beispielsweise ein hydrophiles Material wie Silica-Gel verwendet werden. Prinzipiell kann jedes Trocknungsmittel 72 als Trocknungsmaterial verwendet werden, welches dazu geeignet ist, Feuchtigkeit aus der Luft aufzunehmen. Insbesondere kann in der Trocknungseinheit 12 auch ein Sorbentmaterial 22, insbesondere ein Physisorbent 23, als Trocknungsmittel 72 vorgesehen sein. Bevorzugt wird ein Trocknungsmittel 72 wie Silica-Gel verwendet, welches durch eine entsprechende Prozessführung nach der Aufnahme der Luftfeuchte wieder regeneriert und erneut dem Prozess zugeführt werden kann. Dabei wird ein Trocknungsgrad der Umgebungsluft angestrebt, bei welchem die Restfeuchte der Luft einen Taupunkt von maximal -30°C, vorzugsweise -50°C, besonders bevorzugt maximal -60°C Taupunkt beträgt.

Die Anlage 10 umfasst ferner eine Sorptionseinheit 14, in welcher das Kohlenstoffdioxid 48 aus der Umgebungsluft 74 gebunden wird. Dabei wird das sich in der getrockneten Umgebungsluft 74 befindliche Kohlenstoffdioxid 48 in einem Sorbentmaterial 22, insbesondere in einem Physisorbenten 23, besonders bevorzugt in einem Zeolithmaterial 24 eingespeichert.

Darüber hinaus weist die Anlage 10 eine Speichereinheit 16 auf, in welcher das in der Sorptionseinheit 14 aus der Umgebungsluft abgetrennte Kohlenstoffdioxid 48 in konzentrierter Form eingespeichert wird. Alternativ oder zusätzlich zu einer Speichereinheit 16 kann das abgetrennte Kohlenstoffdioxid 48 auch einem Prozess und/oder einem Verbraucher 82 zugeführt werden, in welchem des Kohlenstoffdioxid weiterverarbeitet oder verwertet wird. Die Anlage 10 umfasst ferner ein Förderelement 18, insbesondere ein Gebläse 20, mit welchem ein Luftstrom an die Umgebungsluft durch die Trocknungseinheit 12 und anschließend durch die Sorptionseinheit 14 geführt wird.

Die Trocknung der Umgebungsluft 74 erfolgt vorzugsweise in einem ersten Prozessraum 26, welcher durch Verschlusselemente 28, insbesondere durch Klappen 30, 32 im Wesentlichen gasdicht von der Umgebung abgetrennt werden kann. Dabei weist der erste Prozessraum 26 mindestens eine Einlassklappe 30 und eine Auslassklappe 32 auf. In dem in Figur 1 dargestellten Ausführungsbeispiel weist der erste Prozessraum 26 zwei Einlassklappen 30 und zwei Auslassklappen 32 auf. In dem ersten Prozessraum 26 können ein Heizelement 34 und/oder ein Kühlelement 36 angeordnet sein, um die Lufttemperatur in der Trocknungseinheit 12 beziehungsweise im ersten Prozessraum 26 zu manipulieren. Vorzugsweise ist ein Heizelement 34 und/oder ein Kühlelement 36 beziehungsweise ein kombiniertes Heiz-Kühl-Element 37 vorgesehen, mit welchem das Trocknungsmittel 72 temperiert wird. In dem ersten Prozessraum 26 beziehungsweise in der Trocknungseinheit 12 sind ein Temperatursensor 40, ein Drucksensor 41, ein Luftfeuchtigkeitssensor 42, ein Sensor 46 zur Erfassung der Strömungsgeschwindigkeit, ein Massenstromsensor und/oder ein Volumenstromsensor 49 angeordnet. Vorzugsweise ist im Trocknungsmaterial 72 ein Temperatursensor 40 vorgesehen, um die Temperatur der Trocknungsmaterials 72 zu bestimmen.

Die Adsorption und anschließende Desorption von Kohlenstoffdioxid erfolgt vorzugsweise in einem zweiten Prozessraum 27, welcher durch Verschlusselemente 28, insbesondere durch Klappen 30, 32 im Wesentlichen gasdicht von der Umgebung abgetrennt werden kann. Ferner weist der zweite Prozessraum 27 ein Heizelement 34, insbesondere einen Wärmetauscher 38 auf, um die Temperatur insbesondere beim Desorptionsprozess entsprechend anheben zu können und das im Sorptionsmaterial 22 adsorbierte Kohlenstoffdioxid 48 wieder freizusetzen. An dem zweiten Prozessraum 27, beziehungsweise an der Sorptionseinheit 14, kann eine Unterdruckpumpe 70 vorgesehen sein, um den Luftdruck in dem zweiten Prozessraum 27 zu manipulieren und insbesondere während eines Desorptionsprozesses abzusenken. Der zweite Prozessraum 27 ist fluidisch mit der Speichereinheit 16 verbunden, in welcher das aus der Umgebungsluft abgetrennte Kohlenstoffdioxid 48 eingelagert werden kann. Dazu ist ein Kompressor 80 vorgesehen, welcher das bei der Desorption im zweiten Prozessraum 27 freigesetzte Kohlenstoffdioxid 48 in die Speichereinheit 16 fördert und dort verdichtet. Alternativ oder zusätzlich kann auch in der Verbindung von dem zweiten Prozessraum 27 zur Speichereinheit 16 eine weitere Unterdruckpumpe 70 angeordnet sein, um das Kohlenstoffdioxid 48 aus dem zweiten Prozessraum 27 abzusaugen und der Speichereinheit 16 zuzuführen. In dem zweiten Prozessraum 27, beziehungsweise in der Adsorptionseinheit 14, sind ein Temperatursensor 40, ein Drucksensor 41 ein Luftfeuchtigkeitssensor 42, ein Sensor zur Erfassung der Kohlenstoffdioxidkonzentration, ein Sensor 46 zur Erfassung der Strömungsgeschwindigkeit, und/oder ein Massenstromsensor und/oder ein Volumenstromsensor 49 angeordnet.

Zwischen der Trocknungseinheit 12 und der Sorptionseinheit 14 ist ein Förderelement 18, insbesondere ein Gebläse 20 vorgesehen, um einen Luftstrom 68 der Umgebungsluft zunächst durch die Trocknungseinheit 12 und anschließend durch die Sorptionseinheit 14 zu fördern. Das Förderelement 18 weist eine Antriebseinheit 64 auf, deren Leistung über eine Leistungsregelung 66 entsprechend angepasst werden kann.

Die Anlage 10 wird vorzugsweise aus erneuerbaren Energien wie Windkraft, Geothermie oder Solarenergie mit Strom versorgt, um beim Betrieb keine zusätzlichen Kohlenstoffdioxidemissionen zu erzeugen. Dazu ist eine Windkraftanlage 60 und/oder eine Solaranlage 62, insbesondere eine Photovoltaikanlage, vorgesehen, um die Anlage 10 mit erneuerbarer Energie zu versorgen.

Die Anlage 10 kann zusätzlich eine Rückführleitung 84 aufweisen, welche getrocknete, kohlenstoffdioxidarme Luft stromabwärts aus dem zweiten Prozessraum 27 oder stromabwärts des zweiten Prozessraums 27 in den ersten Prozessraum 26 zurückführt. Dabei ist in der Rückführleitung 84 ein Rückführventil 86 vorgesehen, über welches ein Volumenstrom an zurückgeführter, getrockneter und kohlenstoffdioxidreduzierte Luft eingestellt werden kann. Ferner kann an der Rückführleitung 84 ein Speicher 88 vorgesehen sein, um die getrocknete, kohlenstoffdioxidreduzierte Luft zu speichern und insbesondere bei einem Stillstand der Anlage 10 wieder freizusetzen, um einen Überdruck in zumindest einem der Prozessräume 26, 27 einzustellen. Ferner ist in der Rückführleitung 84 ein Rückschlagventil 90 angeordnet, um einen Bypass um den zweiten Prozessraum 27 zu unterbinden und eine Strömungsrichtung durch die Rückführleitung 84 vorzugeben. Zudem kann in die Rückführleitung 84 ein Gebläse 92 integriert sein, um die Rückführluft zu fördern

Die Anlage 10 kann zusätzlich eine Spülgasleitung 94 aufweisen, die getrocknete Luft stromabwärts der Trocknungseinheit 12 absaugt, und, durch das Sorptionsmaterial 22 strömend, austretende Restfeuchte abtransportiert. Zur Steuerung des Spülgastroms können in der Spülgasleitung 94 ein Spülgas-Steuerungsventil 96, sowie eine Spülgaspumpe 98 integriert sein. Die Funktion der Unterdruckpumpe 70, des Kompressors 80 und der Spülgaspumpe 98 können auch in einer oder zwei Pumpen realisiert werden.

Die Anlage 10 weist ferner eine Steuerungseinheit 50 mit einer Speichereinheit 52 und einer Recheneinheit 54 auf, wobei in der Speichereinheit 52 ein Computerprogrammcode 56 abgelegt ist, welcher dazu eingerichtet ist, bei Ausführung durch die Recheneinheit 54 der Steuerungseinheit 50 den Betrieb der Anlage 10 zur Abtrennung von Kohlenstoffdioxid 48 aus der Umgebungsluft 74 zu steuern. Die Steuerungseinheit 50 kann über eine Datenverbindung 76 mit einem Datenzentrum 78 in Verbindung stehen, welches der Anlage 10 Daten zur Steuerung der Anlage 10 zur Verfügung stellt oder mit dieser austauscht.

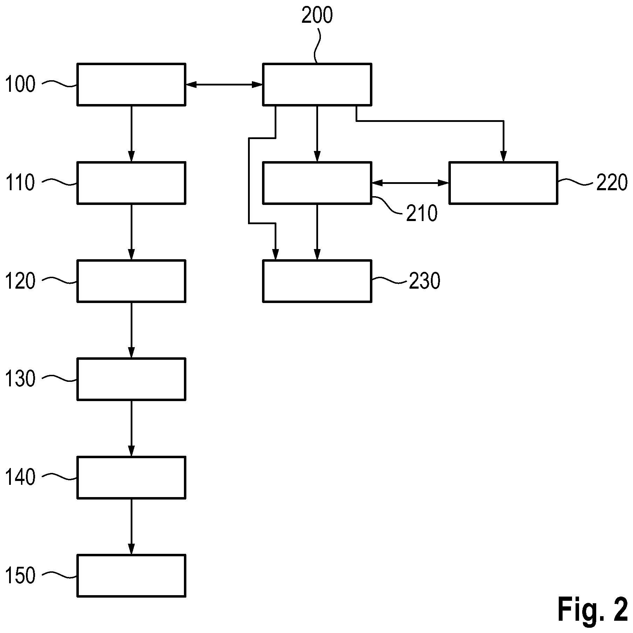

In Figur 2 ist ein Ablaufdiagramm zur Durchführung eines erfindungsgemäßen Verfahrens zur Steuerung einer Anlage 10 zur Abtrennung von Kohlenstoffdioxid 48 aus der Umgebungsluft 74 dargestellt. Das Verfahren unterscheidet zwischen einem Normalbetrieb 100, in welchem Kohlenstoffdioxid 48 aus der Umgebungsluft 78 abgetrennt wird und einem Sonderbetrieb 200, welcher nicht primär zur Abtrennung von Kohlenstoffdioxid 48, sondern hauptsächlich der Vorkonditionierung der Anlage 10 für den nächsten Normalbetrieb 100 dient. In dem Normalbetrieb wird in einem Verfahrensschritt 110 ein Luftstrom 68 der Umgebungsluft 74 in einen ersten Prozessraum 26 der Anlage, welcher sich in der Trocknungseinheit 12 befindet, gefördert. In diesem ersten Prozessraum 26 folgt eine Trocknung des Luftstroms 68, wobei dem Luftstrom 68 Feuchtigkeit entzogen und in einem Trocknungsmittel 72 eingelagert wird.

Anschließend an die Trocknung wird die getrocknete Umgebungsluft 74 in einem Prozessschritt 120 aus dem ersten Prozessraum 26 in einen zweiten Prozessraum 27 weitergeleitet. Die Weiterleitung erfolgt durch ein Förderelement 18, insbesondere durch ein Gebläse 20, welches den Luftstrom 68 der getrockneten Umgebungsluft 68 aus dem ersten Prozessraum 26 der Trocknungseinheit in den zweiten Prozessraum 27 der Sorptionseinheit 14 fördert. Das Trocknungsmittel 72 wird regeneriert, wenn das Trocknungsmittel 72 weitestgehend mit Wasserdampf beladen ist und die Trocknungsleistung nachlässt. Dazu wird das Trocknungsmittel 72 vom eingelagerten Wasserdampf befreit, um für einen neuen Trocknungszyklus von Umgebungsluft zur Verfügung zu stehen.

In einem Verfahrensschritt 130 wird das Kohlenstoffdioxid 48 aus dem im ersten Prozessraum 26 getrockneten Luftstrom 68 in dem Sorbentmaterial 22 in dem zweiten Prozessraum 27 der Anlage 10 sorbiert, welcher sich in der Sorptionseinheit 14 befindet.

In einem Verfahrensschritt 140 erfolgt eine Desorption des im Sorbentmaterial 22 adsorbierten Kohlenstoffdioxids 48. Dazu wird der zweite Prozessraum 27 gasdicht verschlossen, um ein Einströmen von weiterer Umgebungsluft 68 zu verhindern. Ferner wird der Druck im zweiten Prozessraum 27 abgesenkt und der zweite Prozessraum 27 auf eine Desorptionstemperatur aufgeheizt.

In einem Verfahrensschritt 150 wird das bei der Desorption freigesetzte Kohlenstoffdioxid 48 einer Speichereinheit 16 zugeführt und dort eingelagert. Alternativ wird das Kohlenstoffdioxid direkt oder aus der Speichereinheit 16 einer Verwendung zugeführt und dort weiterverarbeitet oder verwertet. Anschließend kann eine Trocknung des Sorbentmaterials 22 erfolgen, um das Sorbentmaterial 22 von verbliebener Restfeuchtigkeit zu befreien und die Aufnahmekapazität für Kohlenstoffdioxid 48 zu erhöhen.

In einem Sonderbetrieb 200 der Anlage 10 wird diese in einem speziellen Betriebsmodus betrieben, welcher vom Betriebsmodus des Normalbetriebs 100 abweicht. Unter einem Sonderbetrieb 200 ist insbesondere, aber nicht abschließend, ein Anfahren der Anlage 10 nach eine Stillstandszeit oder einer Montage, ein Herunterfahren oder Abschalten der Anlage 10, ein Teillastbetrieb der Anlage, ein Stillstandsmodus der Anlage oder ein Betrieb der Anlage 10 nach Feststellung einer Fehlfunktion, oder ein Sonder-Trocknungsschritt der Sorbente zu verstehen.

In einem solchen Sonderbetrieb 200 werden Maßnahmen eingeleitet, um situationsabhängig bestmöglich auf die Besonderheit der entsprechenden Betriebssituation reagieren zu können und insbesondere die Anlage 10 für einen darauffolgenden Normalbetrieb 100 vorzukonditionieren.

Dabei ist beim Anfahren der Anlage 10 nach einer längeren Stillstandszeit, insbesondere einer Stillstandszeit von mehr als 24 h, zunächst ein Trocknungsmodus vorgesehen sein, um das Trocknungsmittel 72 im ersten Prozessraum 26 und das Sorbentmaterial 22 im zweiten Prozessraums 27 zu trocknen.

Beim Herunterfahren der Anlage 10 ist vorgesehen, dass der erste Prozessraum 26 und der zweite Prozessraum 27 derart vorkonditioniert werden, dass ein Entströmen von feuchter Umgebungsluft in einen der Prozessräume 26, 27 unterbunden oder zumindest verringert wird. Die kann unter anderem dadurch erfolgen, dass in einem Verfahrensschritt 210 die Prozessräume 26, 27 gasdicht verschlossen werden.

Ferner kann in einem Prozessschritt 220 ein Überdruck in einem der Prozessräume 26, 27 aufgebaut werden, um ein Einströmen von feuchter Umgebungsluft zu verhindern. Alternativ zu einem Überdruck kann die Anlage auch in einem Umluftbetrieb betrieben werden, wobei die bereits getrocknete Umgebungsluft im Kreis gefördert wird, um ein Einströmen von neuer Umgebungsluft 74 zu verhindern.

In einem Verfahrensschritt 230 werden das Trocknungsmittel 72 und/oder das Sorbentmaterial 22 durch den Betrieb der Anlage 10 mit speziellen Betriebsparametern getrocknet beziehungsweise regeneriert. Dazu kann insbesondere ein Druck und/oder eine Temperatur in dem Prozessraum 26, 27 angepasst werden, um die Trocknung des Trocknungsmittels 72 und/oder des Sorbentmaterials 22 zu unterstützen. Weiteres Steuerungsmittel für diesen Prozessschritt ist die Dauer.

Betrifft der Sonderbetrieb einen Stillstandsmodus der Anlage 10, bei welchem die Anlage 10 nur kurzfristig aus dem Normalbetrieb genommen wird und nicht vollständig abgeschaltet wird, so erfolgt in einem Verfahrensschritt 210 ein Verschließen der Anlage 10. Dabei wird ein Lufteinlass in den ersten Prozessraum 26 beziehungsweise in die Trocknungseinheit 12 sowie ein Luftauslass aus dem zweiten Prozessraum 27 beziehungsweise der Sorptionseinheit 14 verschlossen, sodass die in der Anlage 10 befindliche Luft in einem Verfahrensschritt 220 einem Umlaufbetrieb durch die Anlage 10 zirkuliert. Alternativ oder zusätzlich kann durch das Förderelement 18 ein Überdruck aufgebaut werden, um auch bei einer nicht vollständig gasdichten Verschließung des Systems ein Nachströmen von feuchter Umgebungsluft zu verhindern. Die Maßnahmen führen dazu, dass das Trocknungsmittel 72 und das Sorbentmaterial 22 keine zusätzliche Feuchtigkeit aufnehmen, sodass die Anlage 10 nach Beendigung des Stillstandsmodus vergleichsweise schnell wieder in einen Normalbetrieb überführt werden kann.

### Bezugszeichenliste

- 10: Anlage zur Abtrennung von Kohlenstoffdioxid
- 12: Trocknungseinheit
- 14: Sorptionseinheit
- 16: Speichereinheit
- 18: Förderelement

- 20: Gebläse
- 22: Sorbentmaterial
- 23: Physisorbent
- 24: Zeolith
- 26: erster Prozessraum
- 27: zweiter Prozessraum
- 28: Verschlusselement

- 30: Einlassklappe
- 32: Auslassklappe
- 34: Heizelement
- 36: Kühlelement
- 37: kombiniertes Heiz-Kühl-Element
- 38: Wärmetauscher

- 40: Temperatursensor
- 41: Drucksensor
- 42: Luftfeuchtigkeitssensor
- 44: Sensor zur Erfassung der Kohlenstoffdioxidkonzentration
- 46: Sensor zur Erfassung der Strömungsgeschwindigkeit
- 47: Massenstromsensor
- 48: Kohlenstoffdioxid
- 49: Volumenstromsensor

- 50: Steuerungseinrichtung
- 52: Speichereinheit
- 54: Recheneinheit
- 56: Computerprogrammcode
- 58: Produktgasstrom

- 60: Windkraftanlage
- 62: Solaranlage
- 64: Antriebseinheit
- 66: Leistungsregelung
- 68: Luftstrom

- 70: Unterdruckpumpe
- 72: Trocknungsmittel
- 74: Umgebungsluft
- 76: Datenverbindung
- 78: Datenquelle

- 80: Kompressor
- 82: Verbraucher
- 84: Rückführleitung
- 86: Rückführventil
- 88: Speicher

- 90: Rückschlagventil
- 92: Gebläse für Rückführluft
- 94: Spülgasleitung
- 96: Spülgas-Steuerventil
- 98: Spülgaspumpe

- 100: Verfahrensschritt - Betreiben der Anlage im Normalbetrieb
- 110: Verfahrensschritt - Fördern eines Luftstroms in eine Trocknungseinheit
- 120: Verfahrensschritt - Weiterleiten getrockneter Umgebungsluft
- 130: Verfahrensschrift - Adsorbieren von Kohlenstoffdioxid
- 140: Verfahrensschritt - Desorbieren von Kohlenstoffdioxid
- 150: Verfahrensschritt - Einlagern des desorbierten Kohlenstoffdioxids
- 200: Verfahrensschritt - Betreiben der Anlage in einem Sonderbetrieb
- 210: Verfahrensschritt - Verschließen eines Prozessraums
- 220: Verfahrensschritt - Erzeugen von Überdruck in einem der Prozessräume
- 230: Verfahrensschritt - Regenerieren oder Trocknen von Sorbentmaterial

## Patentansprüche

1. Verfahren zur Steuerung einer Anlage (10) zur Abtrennung von Kohlenstoffdioxid (48) aus der Umgebungsluft (74), umfassend folgende Schritte:
- Betreiben (100) der Anlage in einem Normalbetrieb, wobei der Normalbetrieb folgende Prozessschritte umfasst:
∘ Fördern (110) eines Luftstroms (68) der Umgebungsluft (74) in einen ersten Prozessraum (26), wobei der Luftstrom (68) in dem ersten Prozessraum (26) getrocknet wird,
∘ Weiterleiten (120) der getrockneten Umgebungsluft (74) aus dem ersten Prozessraum (26) in einen zweiten Prozessraum (27),
∘ Adsorbieren (130) von Kohlenstoffdioxid (48) aus dem getrockneten Luftstrom (68) mit einem Sorbentmaterial (22) in dem zweiten Prozessraum (27),
∘ Desorbieren (140) des in dem Sorbentmaterial (22) adsorbierten Kohlenstoffdioxids (48), und
∘ Einlagern (150) des desorbierten Kohlenstoffdioxids (48) in einer Speichereinheit (16) oder Weiterleitung des desorbierten Kohlenstoffdioxids zur direkten Verwendung an einen nachfolgenden Prozess,
- Betreiben (200) der Anlage (10) in einem von dem Normalbetrieb abweichenden Sonderbetrieb, welcher vor oder nach dem Normalbetrieb erfolgt, wobei die Anlage (10) in dem Sonderbetrieb mit von dem Normalbetrieb abweichenden Betriebsparametern betrieben wird.

2. Verfahren nach Anspruch 1, wobei der Sonderbetrieb ein Anfahren der Anlage (10) nach einem Anlagenstillstand ist.

3. Verfahren nach Anspruch 2, wobei beim Anfahren der Anlage (10) eine zusätzliche Regeneration des Trocknungsmittels (72) und/oder eine Trocknung des Sorbentmaterials (22) erfolgt, bevor der Luftstrom (68) der Umgebungsluft (74) in eine Trocknungseinheit (12) oder eine Sorptionseinheit (14) der Anlage (10) eingeleitet wird.

4. Verfahren nach Anspruch 3, wobei zur Regeneration des Trocknungsmittels (72) und/oder zur Trocknung des Sorbentmaterials (22) eine Temperatur in einem der Prozessräume (26, 27) und/oder ein Druck in einem der Prozessräume (26, 27), oder die Prozessschritt-Dauer gegenüber dem Normalbetrieb verändert wird.

5. Verfahren nach einem der Ansprüche 1 bis 4, wobei der Sonderbetrieb ein Abstellen oder Herunterfahren der Anlage (10) umfasst.

6. Verfahren nach Anspruch 5, wobei der erste Prozessraum (26) und/oder der zweite Prozessraum (27) beim Abstellen oder Herunterfahren der Anlage (10) gasdicht verschlossen werden.

7. Verfahren nach Anspruch 5 oder 6, wobei der erste Prozessraum (26) und/oder der zweite Prozessraum (27) beim Abstellen oder Herunterfahren der Anlage (10) mit einem Überdruck beaufschlagt werden, um ein Einströmen von feuchter Umgebungsluft (74) in einen der Prozessräume (26, 27) zu vermeiden.

8. Verfahren nach einem der Ansprüche 1 bis 7, wobei der Sonderbetrieb einen Stillstandsmodus der Anlage (10) umfasst.

9. Verfahren nach Anspruch 8, wobei der erste Prozessraum (26) und/oder der zweite Prozessraum (27) beim Stillstandsmodus der Anlage (10) gasdicht verschlossen werden.

10. Verfahren nach Anspruch 8 oder 9, wobei ein Luftstrom (68) der Umgebungsluft (74) in einem der Prozessräume (26, 27) zirkuliert.

11. Verfahren nach einem der Ansprüche 8 bis 10, wobei der erste Prozessraum (26) und/oder der zweite Prozessraum (27) beim Stillstandsmodus der Anlage (10) mit einem Überdruck beaufschlagt werden, um ein Einströmen von feuchter Umgebungsluft (74) in einen der Prozessräume (26, 27) zu vermeiden.

12. Verfahren nach einem der Ansprüche 1 bis 11, wobei der Sonderbetrieb eine Anpassung der Anlagenparameter nach einer erkannten Fehlfunktion der Anlage (10) umfasst.

13. Anlage (10) zur Abtrennung von Kohlenstoffdioxid aus der Umgebungsluft (74), umfassend:
- eine Trocknungseinheit (12) zur Trocknung der Umgebungsluft (74),
- ein Förderelement zur Förderung eines Luftstroms (68) der Umgebungsluft (74) in einen ersten Prozessraum (26) in der Trocknungseinheit (12), wobei der Luftstrom (68) in dem ersten Prozessraum (26) getrocknet wird,
- eine Sorptionseinheit (14) zur Adsorption von Kohlenstoffdioxid (48) aus dem getrockneten Luftstrom (68) mit einem Sorbentmaterial (22) in einem zweiten Prozessraum (27), sowie zur anschließenden Desorption des in dem Sorbentmaterial (22) adsorbierten Kohlenstoffdioxids (48), und
- eine Speichereinheit (16) zum Einlagern des desorbierten Kohlenstoffdioxids (48) oder einen Prozesseinheit zur Verwendung oder Weiterverarbeitung des abgetrennten Kohlenstoffdioxids (48), sowie
- mit einer Steuerungseinheit (50), wobei die Steuerungseinheit (50) dazu eingerichtet ist, ein Verfahren nach einem der Ansprüche 1 bis 12 auszuführen.

14. Anlage (10) nach Anspruch 13, wobei in der Trocknungseinheit (12) oder stromabwärts der Trocknungseinheit (12) und stromaufwärts der Sorptionseinheit (14) ein Luftfeuchtigkeitssensor / Taupunktsensor (42) und/oder ein Temperatursensor (40) angeordnet ist.

15. Anlage (10) nach Anspruch 13 oder 14, wobei in der Sorptionseinheit (14) ein Temperatursensor (40), ein Drucksensor (41), ein Luftfeuchtigkeitssensor (42), ein Sensor zur Erfassung der Kohlenstoffdioxidkonzentration (44), ein Sensor zur Erfassung der Strömungsgeschwindigkeit (46), ein Massenstromsensor (47) und/oder ein Volumenstromsensor (49) angeordnet ist.
